# EUROPEAN PATENT SPECIFICATION

(11) **EP 3 087 672 B1**
(45) Date of publication and mention of the grant of the patent: **12.02.2020**
(21) Application number: 14833463.4
(22) Date of filing: 22.12.2014
(51) Int. Cl.: H02S 40/34

(54) **HOUSING FOR SOLAR PANEL ELECTRIC CONNECTION**
GEHÄUSE FÜR DIE ELEKTRISCHE VERBINDUNG VON SOLARPANEELEN
BOÎTIER POUR RACCORDEMENT ÉLECTRIQUE DE PANNEAU SOLAIRE

(30) Priority: 23.12.2013 IN 6045CH2013
(43) Date of publication of application: 02.11.2016
(73) Proprietor: TE Connectivity India Private Limited, Bangalore 560048 (IN)
(72) Inventor: SHETTY, Praneeth, Prabhakar, Karkala Taluk Karnataka 574104 Udupi (IN); SETTRU, Gururaj, Karnataka (IN); THOTA, Suresh, 500044 Hyderabad (IN)
(74) Representative: Patentanwaltskanzlei WILHELM & BECK
(86) International application number: PCT/IB2014/002869
(87) International publication number: WO 2015/097537

(56) References cited:
- EP-A1- 1 912 261
- WO-A1-2007/134212
- DE-A1-102012 001 589
- DE-U1-202011 005 480
- DE-U1-202012 103 480
- US-A1- 2012 000 524

## Description

Present invention concerns a solar junction box for an electric connection. Particularly, present invention concerns a housing for an electric connection between a solar panel and a cable system.

A junction box for a solar panel comprises an electric connection and a housing to protect the connection from environmental influences such as moisture, dust and conductive objects. The junction box is mounted on the solar panel and electrically connected to solar cells of the panel. At the time of installing the solar panel, the junction box is opened and an electric connection is made between a cable system and electric contacts of the cables that lead to the solar cells. After this, the junction box is closed again and, unless servicing is required, may remain unopened for several years or even several decades.

It is a requirement that the housing protects the electric connection well for a long time. Another requirement is that mounting, unmounting and servicing should be easy. Especially in contemporary installations that comprise hundreds or even thousands of solar panels, price is also an issue.

EP 1 912 261 A1 and DE 20 2012 103 480 U1 disclose a solar junction box comprising a first chassis element, a second chassis element, a bushing for sealing a cable running between the outside and the inside of the junction box, wherein the first and the second chassis elements lie on opposite lateral sides of the bushing and both chassis elements comprise each a recess for receiving the bushing.

US 2012/000524 A1 discloses a method for assembling a solar junction box with the steps of applying liquid polyurethane into a groove of one chassis element. Letting the polyurethane polymerize into a polymeric foam gasket in order to permit adhering the gasket to the chassis element.

The invention sets out to provide a solar junction box that fulfils at least some of the given requirements. The invention therefore proposes a junction box and a method for assembling the junction box according to the features of the enclosed independent claims. Dependent claims give advantageous embodiments.

According to the invention, a solar junction box comprises a first chassis element, a second chassis element and a bushing for sealing a cable running between the outside and the inside of the junction box against the chassis elements. The first and the second chassis elements lie on opposite lateral sides of the bushing and both chassis elements comprise a recess for receiving a section of the bushing.

The bushing comprises first and second axial end sections and an axial middle section wherein the middle section has a smaller diameter than the end sections. This way, the axial sections may help in sealing the cable against the chassis elements. Also, when an axial strain is put upon the bushing, the increased diameters of the end sections of the bushing may prevent the bushing from being pulled through the aperture that is formed between the two chassis elements.

The bushing may comprise an axial opening through which the cable may traverse. This way, the junction box may be better sealed against an environment. Long-term protection of an electric connection inside the junction box may be sustained. Both chassis elements may be free from undercuts or indentations so that the chassis elements can be produced in a moulding process wherein each chassis element requires no more than two moulds. This can make a significant contribution to an economy price for the junction box.

The chassis elements may form a groove that runs around a space confined between the two chassis elements wherein a gasket for sealing the chassis elements is located in the groove.

The gasket can make sure that the mentioned sealing around the cable is supplemented by a sealing along a junction of the two chassis elements. Sealing and long-term stability of the junction box may thus be further improved.

The gasket may comprise a polymeric foam. Thus, production costs may further be reduced. Also, the polymeric foam may show good gap filling properties and may stay elastic for a long time. In an alternative embodiment, a rubber gasket may be used.

One chassis element may comprise a snap-in nose and the other chassis element may comprise a recess for receiving the snap-in nose, such as to lock the chassis elements together when the junction box is closed. By using a snap-in connection between the two chassis elements, a time consuming opening and closing of a screw for opening and closing the junction box can be evaded. Also, a necessity for a thread in one of the chassis elements can be overcome so that production of the chassis elements, especially if it involves moulding, may be significantly reduced in price.

In a preferred embodiment, the snap-in nose and the recess are located on an outside of the junction box. This permits to open and close the junction box without requiring special tools. In one embodiment, no tools at all may be required. More space inside the junction box may be available for the electric connection. Also, arrangement of the snap-in nose and the recess on the outside of the junction box may simplify design of the chassis elements in such a way that moulding can be done at a reasonable price, especially without any movable sliders.

In another preferred embodiment, the bushing comprises silicone. The silicone bushing can be produced at a low price an in large volumes. Replacing a damaged or aged silicone bushing during servicing the junction box may thus be simplified. In another embodiment, a different material such as rubber may also be used.

The axial middle section may be axially longer than the aperture in the chassis elements. This way a certain amount of axial and/or bending movement may be allowed to the bushing.

In one embodiment, a section of the bushing adjacent to the recess carries a radial lip that runs in a direction around the bushing. The lip may help in sealing against the flexible bushing as the bushing presses radially against the lip so that a labyrinth is formed to provide a better sealing between the inside and the outside of the junction box. In this, the lip may be deformed. For the same reason, the lip may help in creating friction when the bushing is strained in an axial direction. In a preferred embodiment, several parallel lips run around the bushing. Experiments have shown that three lips running around the bushing will show good sealing and friction results while making the chassis elements not overly complex.

In one embodiment, the junction box further comprises a first cable guide that is attached to an outside of one chassis element.

By placing the first cable guide on the outside of the chassis element, a lateral strain in the cable can be kept from the bushing so that the bushing may provide a sealing between the cable and the chassis element regardless of the lateral strain. An inside of the junction box can thus be better protected against influences like moisture or dust and an electrical connection that is located on the inside of the junction box may be better adapted to stay intact over a long time.

In another embodiment, a second cable guide is attached to the chassis element on an outside of the junction box, for holding and/or guiding the cable through an opening of the second cable guide.

The second cable guide may help securing a cable that runs into or from the junction box. Together with the first cable guide, the second cable guide may provide a better strain relief for the cable. A predetermined axial force on the cable, for instance in the region of about 60-80 N, may be sustainable without the cable slipping through the bushing. This may also allow to pull the cable through the second cable guide during installation.

One of the chassis elements may comprise a level outer surface for adhering to a backside surface of the solar panel. By mounting the junction box through adherence, interlocking features between the solar panel and the junction box may be spared. The solar panel need not be specially prepared for use with the junction box, which may make installation of the described junction box on any given solar panel easier. This capability may promote use of the junction box which may lead to further decrease of production cost for the junction box.

In another preferred embodiment, the chassis element with the level outer surface also comprises an aperture surrounded by the adhering surface. This may help to save material for the chassis element, so that the chassis element can be made lighter or cheaper.

A method for assembling the above described junction box comprises steps of applying liquid polyurethane into the grove of one chassis element and of letting the polyurethane polymerize into a polymeric foam gasket in order to permit adhering the gasket to the chassis element.

The gasket may thus be undetachable from the chassis element so that mounting the junction box without a gasket is not possible. It may also be cheaper in production to pour the liquid polyurethane instead of setting a self contained gasket into the groove.

The invention will now be discussed in more detail with reference to the enclosed figures, in which:
- Fig. 1: shows an exploded view of a junction box for a solar panel;
- Fig. 2: shows the junction box of Fig. 1 in a closed state;
- Fig. 3: shows a first cross section of the junction box of Figs. 1 and 2;
- Fig. 4: shows a second cross section of the junction box of Figs. 1-3;
- Fig. 5: shows a third cross section of the junction box of Figs. 1-4;
- Fig. 6: shows the junction box of Figs. 1-5 when the junction box is mounted on the back of a solar panel;
- Fig. 7: shows the junction box of Fig. 6 from a different perspective and
- Fig. 8: shows a sequence diagram of a method for assembling the junction box of Figs. 1-7

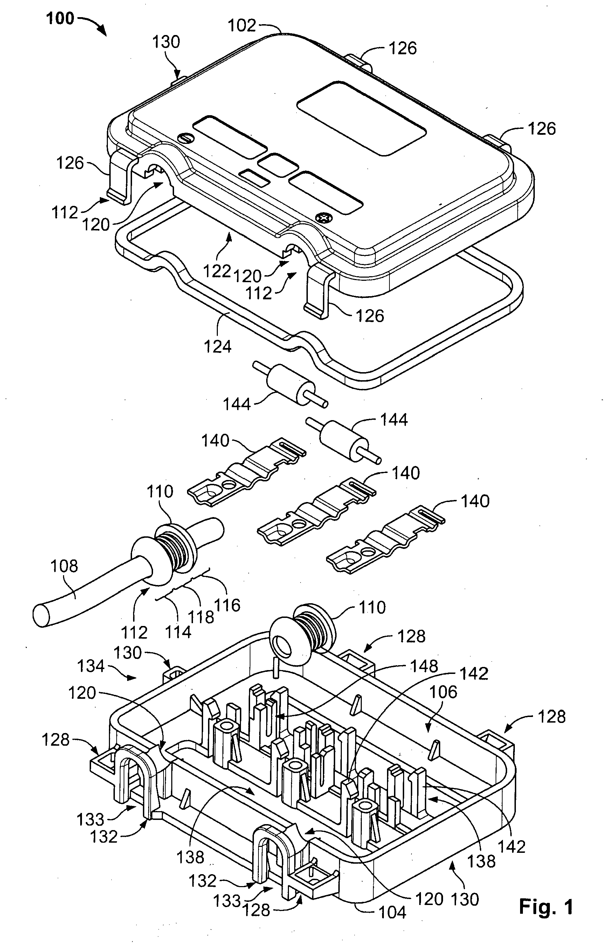

Figure 1 shows an exploded view of a junction box 100 for a solar panel. Physical dimensions of the exemplary embodiment depicted in Figure 1 are approx. 85 x 112 mm. The junction box 100 comprises a first chassis element 102 and a second chassis element 104 which are adapted to be held together such that there is a confined space 106 that can be used for an electric connection. In order to run a cable 108 between the outside and the inside of the junction box 100, the junction box 100 further comprises a bushing 110 with an axial aperture 112 for the cable 108. The bushing 110 is preferred to have a first axial end section 114, a second axial end section 116 and an axial middle section 118 that lies between the first and second axial sections 114 and 116. It is preferred that the axial middle section 118 has a smaller diameter than the first and second axial sections 114, 116. The bushing 110 is expandable also in its axial length, such that the axial length of the middle section 118 increases during mounting of the bushing 110. In a mounted state, i.e. when the bushing 110 is mounted in the recess 120, the axial length of the middle section 118 has the same length as the axial length of the recess 120.

Each chassis section 102, 104 comprises at least one recess 120, wherein corresponding recesses 120 face each other to constitute the aperture 112. The bushing 110 is adapted to lie in the aperture 120 such that the chassis elements 102, 104 lie on opposite sides of the bushing 110. A diameter of the aperture 112 is by preference about as large as an outer diameter of the middle section 118 of bushing 110. As can be seen in Figure 1, there may be two or more than bushings 110 with associated apertures 112 in the chassis elements 102, 104 for running more cables 108 between the outside and the inside of the junction box 100.

It is preferred that there is a groove 122 formed between the chassis elements 102 and 104. In one embodiment, the groove 122 is formed in only one chassis element, for instance the first chassis element 102 as shown in Figure 1. The other chassis element 104 serves to close the groove 122 with the gasket 124 inside when the junction box 100 is closed. In another embodiment, the groove 122 is formed at least in part in both chassis elements 102 and 104. It is also preferred that there are three or even more grooves 122 in parallel formed in the chassis elements 102 and/or 104.

The gasket 124 may be a self contained gasket, for instance made from rubber, silicone or a polymer. As will be explained in more detail later on, it is preferred that the gasket 124 comprises a polymeric foam and the gasket 124 may be manufactured from a liquid inside the groove 122. In the shown, preferred embodiment, the gasket 124 is not interrupted by the bushing 110; instead, the gasket 124 is preferred to run essentially in one plane and leave that plane only to circumvent the bushing 110. In the area of the circumvention, the gasket 124 may lie adjacent to bushing 110.

For locking the chassis elements 102, 104 together when the junction box 100 is closed, it is preferred that one of the chassis elements, for instance the first chassis element 102 as shown in Figure 1, comprises a snap-in nose 126, while the other chassis element 104 comprises a corresponding recess 128 for receiving the snap-in nose 126. There may also be several snap-in noses 126 and corresponding recesses 128 for even distribution of closing forces of the junction box 100. The snap-in noses 126 and corresponding recesses 128 are preferred to be located on the outside of junction box 100. It is furthermore preferred that the snap-in noses 126 are configured to be unlockable with a simple tool such as a screwdriver or by hand without any tool at all.

In one option, each chassis element 102, 104 also carries an eye 130 for threading a seal through the eyes 130 after the junction box 100 is closed. The junction box may be locked or sealed through the eyes 130.

In one option, one of the chassis elements, for instance the second chassis element 104 as shown in Figure 1, comprises a first cable guide 132 with an aperture 133 for running through the cable 108. The first cable guide 132 is preferred to extend along a shape of the letter U, wherein the shape in the picture of Figure 1 is in an upside down position with respect to the letter U. The first cable guide 132 lies on an outside of the junction box 100 and is displaced by preference such that an axial contact with the bushing 110 can be made. In another embodiment, there may be a small axial gap in the range of 1 to 5 millimetres, by preference between 2 and 4 millimetres. The first cable guide 132 may prevent the cable 108 from creasing when a lateral force pulls an outside section of cable 108 in a lateral direction. The first cable guide 132 is preferred to be in one piece with the chassis element 104 and the material of the first cable guide 132 is preferred to be more rigid than the material of the bushing 110.

In another preferred environment, one of the chassis elements, for instance the second chassis element 104 in Figure 1 furthermore comprises a second cable guide 134 for holding a section of the cable 108. As will be explained in more detail further down, the cable 108 is preferred to run from the inside of the junction box 100 through the bushing 110 and the first cable guide 132, make a turn of about 180° and then run through the second cable guide 134. The second cable guide 134 is preferred to extend along a shape of the letter L, wherein the shape in the picture of Figure 1 is turned upside down with respect to the letter L.

One of the chassis elements 102, 104, for instance the second chassis element 104 in Figure 1, may have an outer surface 136 for adhering to a solar panel. When the surface 136 is pressed against another surface, connections to open structures of the first cable guide 132 and the second cable guide 134 may be closed so that the cable 108 is held on all sides.

In another preferred embodiment, the surface 136 is level and may comprise one or more apertures 138, so that the aperture 138 is laterally surrounded by sections of the adhering surface 136. When the surface 136 rests against a another surface, especially the back surface of a solar panel, the apertures are closed. It is preferred that the surface 136 is adhered to the other surface such that the aperture 138 is sealed. Glue or cement may be used for adhering the junction box 100 to the other surface.

Inside the junction box 100, there may be additional structures for supporting an electric connection between wires of the cable 108. In one embodiment, the junction box 100 comprises a conductive rail 140 for making an electric connection. One of the chassis elements, for instance the second chassis element 104 in Figure 1, may carry a snap-in support 142 for the rail 140. It is preferred that the snap-in support 142 is configured such that the rail 140 may be inserted into the chassis element 104 without tools and held there by the snap-in support 142. It is especially preferred to provide several rails 140, for instance three rails 140 as shown in Figure 1.

The junction box 100 may also comprise an electric element 144 for connecting to two rails 140. The electric element 144 may especially comprise a Schottky diode. The chassis element 104 comprising the snap-in support 142 may also comprise a guide 148 for clamping an electric contact of the element 144 so that a position of the element 144 in the chassis element 104 is fixed. An electric connection between the element 144 and the rail 140 may be done through this mechanism alone or another way of connecting may be in place, such as soldering the electric contact of the element 144 to the rail 140.

It is preferred that significant features of the chassis elements 102, 104 are configured such that moulding the chassis elements 102, 104 can be carried out with a mould that comes in no more than two parts.

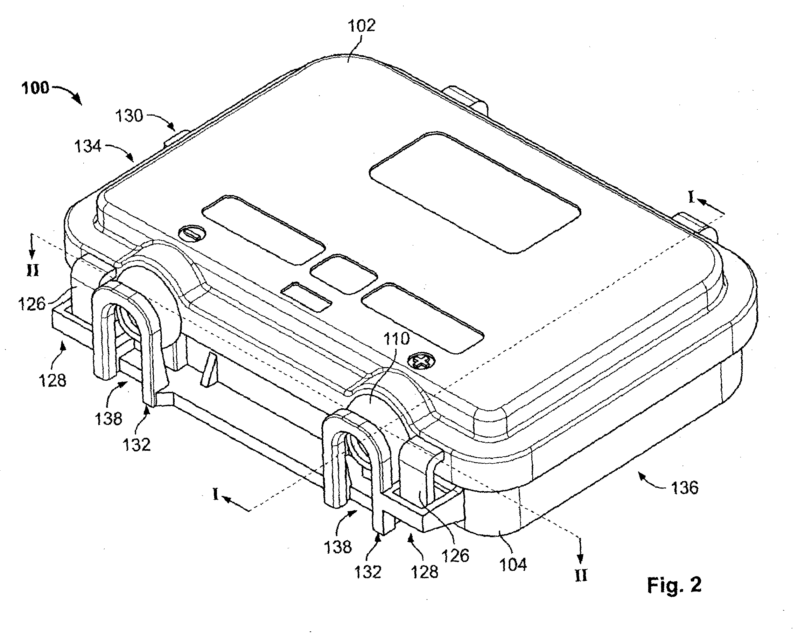

Figure 2 shows the junction box 100 of Figure 1 in a closed state. The snap-in noses 126 have engaged with boundaries of the recesses 128 and keep the chassis elements 102, 104 locked together. In one embodiment, engagements of the snap-in noses 126 with the borders of the corresponding recesses 128 requires compressing the gasket 124 with a predetermined force. To disengage the snap-in noses 126, they can be bent laterally, either with a tool like a screwdriver or manually. After that, the chassis elements 102, 104 may be separated from each other and the junction box 100 may be opened.

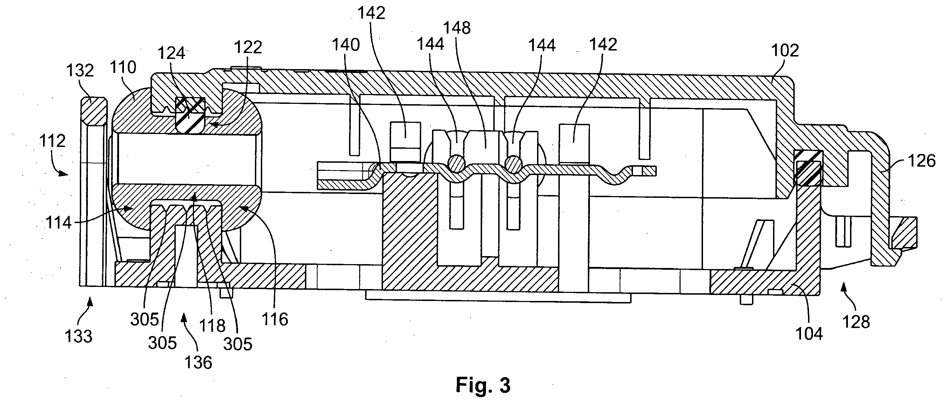

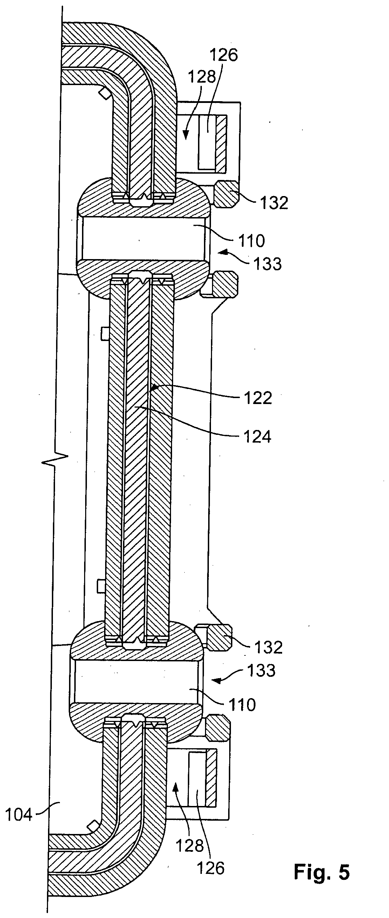

Sectional lines I-I and II-II show in which directions the junction box 100 is cut for the illustrations of Figure 3 and 5, respectively.

Figure 3 shows a first cross section of the junction box 100 of Figures 1 and 2, wherein the section follows the line I-I in Figure 2.

Where the middle section 118 of the bushing 110 lies adjacent to the recess 120 in the chassis elements 102, 104, at least one lip 305 extends in a radial direction from the bushing 110 and runs in a direction around a longitudinal axis of bushing 110. In the shown, preferred embodiment, three lips 305 are positioned in parallel.

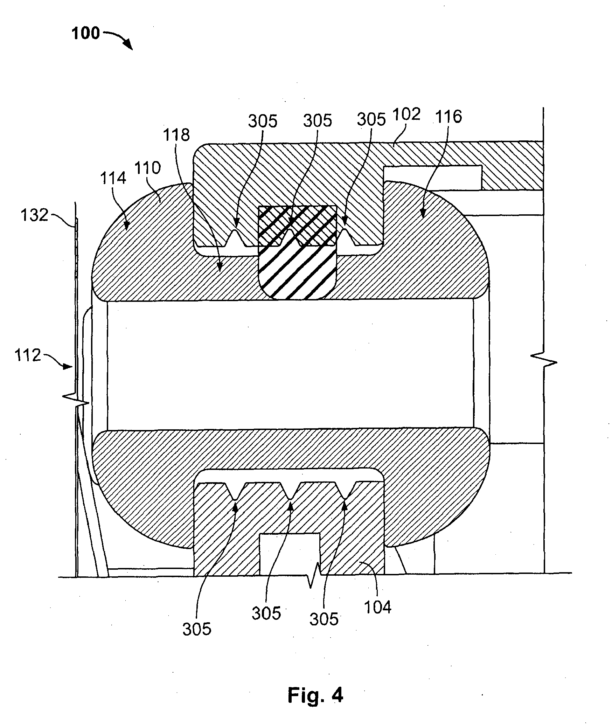

Figure 4 shows a second cross section of the junction box 100 of Figures 1 to 3, wherein the section follows the sectional line I-I in Figure 2. Figure 4 is a magnified detail of Figure 3 in an area of bushing 110. Note that most of the first cable guide 132 is cut away but it can be seen that the axial distance between the first cable guide 132 and an axial end of the bushing 110 may be small, like in the range of 1 to 5 mm, more preferred in the range of 2 to 4 mm.

As best seen in figure 4, the lips 305 of the bushing 110 interact with both the upper, i.e. first chassis element 102 and the lower, i.e. second chassis element 104.

The interaction between the second chassis element 104, i.e. the lower chassis element 104 as shown in Figure 4 and the three lips 305 is such that all three lips 305 have interference with the recess 120 of the second chassis element 104. A reliable sealing engagement is thus achieved between the bushing 110 and the second chassis element 104 since the lips 305 seal and push against the surface of the recess 120.

The interaction between the three lips and the first chassis element 102, i.e. the upper chassis element 102 as shown in figure 4 is similar. However, the middle lip 305 engages with the sealing gasket 124 (see also figure 3), so that this sealing lip 305 has interference with the sealing gasket 124. Due to the pressure created between this middle lip 305 and the sealing gasket 124, a reliable sealing is achieved.

The other two lips 305, 305, i.e. inner and outer lips 305, 305, are in contact with the first chassis element 102 in order to achieve interference with the surface of the recess 120 of the upper chassis element 102. Thus, a reliable sealing is achieved by the lips pushing against the surface of the recess 120 of the first chassis element 102.

Figure 5 shows a third cross section of the junction box 100 of Figures 1 to 4, the section following the sectional line II-II in Figure 2. From the first chassis element 102, only small sections of the snap-in noses 126 are visible. The indicated groove 122 in the second chassis element 104 for the gasket 124 is optional.

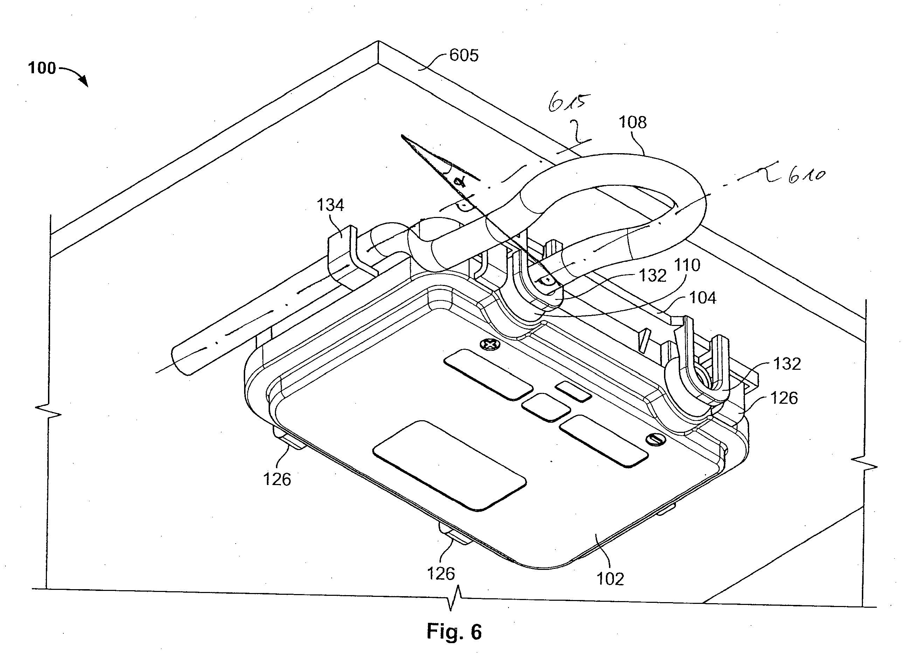

Figure 6 shows the junction box 100 of Figures 1 to 5 when the junction box is mounted on the backside of a solar panel 605. The even surface 136 of second chassis element 104 is fastened to the backside of solar panel 605 with an adhesive. The adhesive is preferred to be stable over temperatures up to at least 80 °C or more as the solar panel 605 may get hot during operation.

The cable 108 runs from the inside of the junction box 100 through the bushing 110 and the first cable guide 132, then makes a turn of about 180 degrees and passes through the opening of the second cable guide 134. A longitudinal axis 610 of the cable 108 at the first cable guide 132 may be further away from the solar panel 605 than another longitudinal axis 615 where the cable 108 runs through the second cable guide 134. In this embodiment, the longitudinal axes 610, 615 lie in a plane that encloses an acute angle α with the plane in which lies the back of the solar panel 605 and the surface 136.

The cable 108 is preferred to have a diameter that is aligned with openings of the first and second cable guides 132, 134 such that threading the cable 108 through the openings is possible after the junction box 100 has been disposed on the surface of solar panel 605 but at the same time there is enough friction between the cable 108 and the first cable guide 132 or the second cable guide 134, respectively, that a longitudinal strain on the cable 108 of a predetermined force in the range of about 50 to 100, most specifically 60 to 80 N can be resisted.

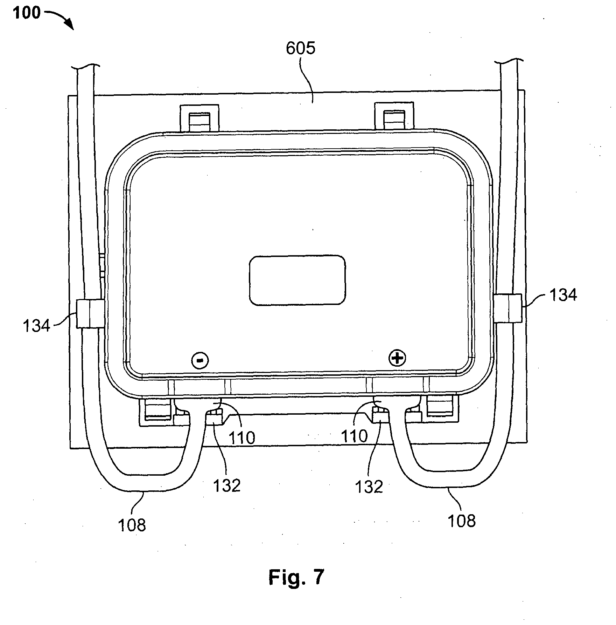

Figure 7 shows the junction box 100 of Figure 6 mounted on the solar panel 605 from a different perspective. In this embodiment, two cables 108 are provided and each cable 108 runs through a corresponding second cable guide 134. In this embodiment, the first and second cable guides 134 lie on opposite lateral sides of the junction box 100.

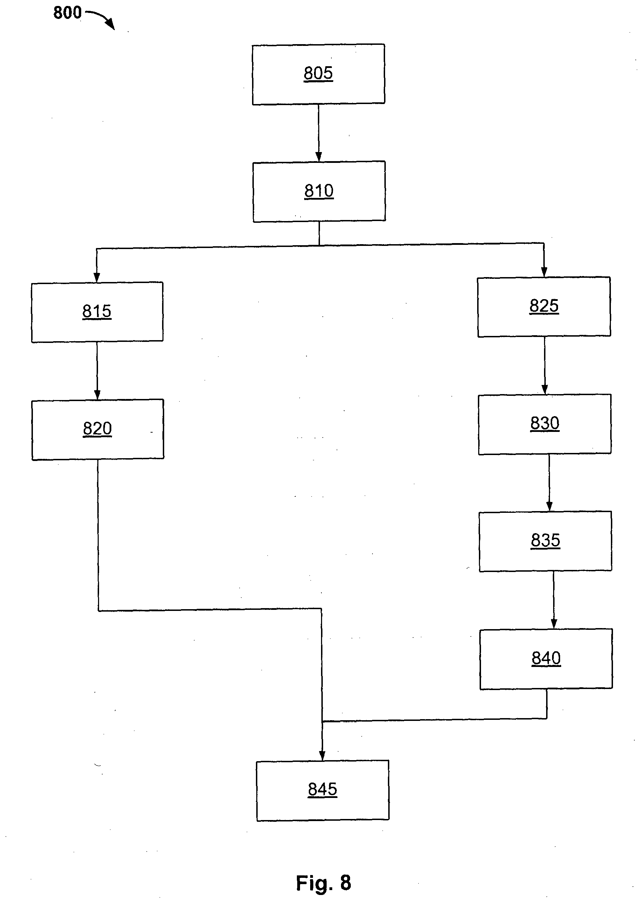

Figure 8 shows a sequence diagram of a method 800 for assembling the junction box 100 of Figures 1 to 7. In a first step 805, the first chassis element 102 is provided and in another step 810, the second chassis element 104 is provided. Both chassis elements 102, 104 may be manufactured at the same time. It is especially preferred that at least one of the chassis elements 102, 104 is manufactured through injection moulding, for instance with a plastic material.

After that, in a step 815, one of the chassis elements, for instance the first chassis element 102 in Figure 1, may be fitted with the gasket 124. For this, liquid polyurethane is applied into the groove 122 that runs around the space that is later confined by the junction box 100. In a following step 820, the polyurethane is allowed to polymerize. Polymerization can take place on the basis of moisture in the air or water may be specifically applied to the polyurethane.

Independent from and possibly concurrent to the procedure of steps 810 and 820, the second chassis element 104 may be fitted with further elements. In a step 825, one or more rails 140 may be set into the chassis element 104. It is preferred that setting the rails 140 into the second chassis element 104 requires no tools and the snap-in supports 142 hold the rail 140 in place. After that, in a step 830, one or more electric elements 144 may be set into the second chassis element 104. It is preferred that this step also can be carried out without special tools and that the electric element 144 is held by form or friction at the second chassis element 104 through the guide 148. In a following step 835, the electric elements 144 may be soldered to the rails 140. Should during operation of the junction box 100 temperatures rise so high that the soldering tin starts to get soft, it is preferred that the guide 148 and the snap-in support 142 still provide enough physical support to keep an electric connection between the elements 144 and the rail 140 intact.

In a following step 840, the bushing 110 may be set into the recess 112.

In a variant of method 800, the bushings 110 may be set into the polymerizing polyurethane before or during step 820. The bushings 110 may then adhere to the gasket 124 that is created through polymerization of the polyurethane.

The junction box 100 may be closed in an optional step 845.

## Claims

1. Solar junction box (100) for an electric connection for a solar panel (605), the Housing (100) comprising:
- a first chassis element (102);
- a second chassis element (104);
- a bushing (110) for sealing a cable (108) running between the outside and the inside of the solar junction box (100) against the chassis elements (102, 104),
- wherein the first and second chassis elements (102, 104) lie on opposite lateral sides of the bushing (110) and both chassis elements (102, 104) comprise a recess (120) for receiving a section of the bushing (110),
- **characterized in that**
- the bushing (110) comprises first and second axial end sections (114, 116) and an axial middle section (118) and the middle section (118) has a smaller diameter than the axial end sections (114, 116).

2. Junction box (100) according to claim 1, wherein the chassis elements (102, 104) form a groove (122) that runs around a space confined between the two chassis elements (102, 104) and a gasket (124) for sealing the chassis elements (102, 104) is located in the groove (122).

3. Junction box (100) according to claim 2, wherein the gasket (124) is selected from one of polymeric foam or silicone seal.

4. Junction box (100) according to one of the preceding claims, wherein the bushing (110) comprises silicone.

5. Solar junction box (100) according to one of the preceding claims , wherein the axial middle section (118) has at least the same axial length as the aperture (120) in the chassis elements (102, 104).

6. Junction box (100) according to one of the preceding claims, wherein a section (118) of the bushing (110) adjacent to the recess (112) has a lateral lip (305) that runs in a direction around the bushing (110).

7. Junction box (100) according to claim 6, wherein there are several parallel lips (305) that run around the bushing (110).

8. Junction box (100) according to claim 7, wherein all of said several parallel lips (305) are in contact with a recess (120) of said second chassis element (104).

9. Junction box (100) according to any of claims 6 or 7, wherein a first part of said parallel lips (305) is in contact with a recess (120) of said first chassis element (102) and a second part of said parallel lips (305) is in contact with a sealing gasket (124).

10. Junction box (100) according to one of the preceding claims, wherein a first cable guide (132, 134) is attached to an outside of one chassis element (104).

11. Junction box (100) according to one of the preceding claims, wherein a second cable guide (132, 134) is attached to the chassis element (104) on an outside of the junction box, for guiding the cable (108) through an opening of the second cable guide (132, 134).

12. Method for assembling a solar junction box (100) according to one of claims 3 to 9, the method comprising steps of
- applying (815) liquid polyurethane into the groove (122) of one chassis element (102, 104) and
- letting (820) the polyurethane polymerize into a polymeric foam gasket (124) in order to permit adhering the gasket (124) to the chassis element (104).

## Patentansprüche

1. Solaranschlusskasten (100) für eine elektrische Verbindung für ein Solarpaneel (605), wobei das Gehäuse (100) Folgendes umfasst:
- ein erstes Gehäuseelement (102);
- ein zweites Gehäuseelement (104);
- eine Durchführung (110) zum Abdichten eines Kabels (108), das zwischen der Außenseite und der Innenseite des Solaranschlusskastens (100) verläuft, gegen die Gehäuseelemente (102, 104),
- wobei das erste und zweite Gehäuseelement (102, 104) auf einander gegenüberliegenden lateralen Seiten der Durchführung (110) liegen und beide Gehäuseelemente (102, 104) eine Vertiefung (120) zum Aufnehmen eines Abschnitts der Durchführung (110) umfassen,
**dadurch gekennzeichnet, dass** die Durchführung (110) einen ersten und zweiten axialen Endabschnitt (114, 116) und einen axialen Mittelabschnitt (118) umfasst und dass der Mittelabschnitt (118) einen kleineren Durchmesser als die axialen Endabschnitte (114, 116) hat.

2. Anschlusskasten (100) nach Anspruch 1, wobei die Gehäuseelemente (102, 104) eine Nut (122) bilden, die rund um einen zwischen den zwei Gehäuseelementen (102, 104) eingeschlossen Raum verläuft, und wobei sich eine Dichtung (124) zum Abdichten der Gehäuseelemente (102, 104) in der Nut (122) befindet.

3. Anschlusskasten (100) nach Anspruch 2, wobei die Dichtung (124) aus einem aus Polymerschaum oder einer Silikondichtung ausgewählt wird.

4. Anschlusskasten (100) nach einem der vorhergehenden Ansprüche, wobei die Durchführung (110) Silikon umfasst.

5. Solaranschlusskasten (100) nach einem der vorhergehenden Ansprüche, wobei der axiale Mittelabschnitt (118) zumindest die gleiche axiale Länge wie die Öffnung (120) in den Gehäuseelementen (102, 104) hat.

6. Anschlusskasten (100) nach einem der vorhergehenden Ansprüche, wobei ein Abschnitt (118) der Durchführung (110) angrenzend an die Vertiefung (112) eine laterale Lippe (305) aufweist, die in eine Richtung rund um die Durchführung (110) läuft.

7. Anschlusskasten (100) nach Anspruch 6, wobei es mehrere parallele Lippen (305) gibt, die rund um die Durchführung (110) laufen.

8. Anschlusskasten (100) nach Anspruch 7, wobei alle der mehreren parallelen Lippen (305) in Kontakt mit einer Vertiefung (120) des zweiten Gehäuseelements (104) sind.

9. Anschlusskasten (100) nach einem der Ansprüche 6 oder 7, wobei ein erster Teil der parallelen Lippen (305) in Kontakt mit einer Vertiefung (120) des ersten Gehäuseelements (102) ist und ein zweiter Teil der parallelen Lippen (305) in Kontakt mit einer abdichtenden Dichtung (124) ist.

10. Anschlusskasten (100) nach einem der vorhergehenden Ansprüche, wobei eine erste Kabelführung (132, 134) an einer Außenseite eines Gehäuseelements (104) befestigt ist.

11. Anschlusskasten (100) nach einem der vorhergehenden Ansprüche, wobei eine zweite Kabelführung (132, 134) an dem Gehäuseelement (104) an einer Außenseite des Anschlusskastens befestigt ist, zum Führen des Kabels (108) durch eine Öffnung der zweiten Kabelführung (132, 134) .

12. Verfahren zum Zusammenbauen eines Solaranschlusskastens (100) nach einem der Ansprüche 3 bis 9, wobei das Verfahren die folgenden Schritte umfasst:
- Einbringen (815) von flüssigem Polyurethan in die Nut (122) eines Gehäuseelements (102, 104) und
- Zulassen (820), dass das Polyurethan in eine Polymerschaumdichtung (124) polymerisiert, um ein Haften der Dichtung (124) am Gehäuseelement (104) zu ermöglichen.

## Revendications

1. Boîte de jonction solaire (100) pour une connexion électrique pour un panneau solaire (605), le logement (100) comprenant :
- un premier élément châssis (102) ;
- un second élément châssis (104) ;
- une traversée (110) pour fixer de manière étanche un câble (108) passant entre l'extérieur et l'intérieur de la boîte de jonction solaire (100) contre les éléments châssis (102, 104),
- dans laquelle les premier et second éléments châssis (102, 104) se trouvent sur des côtés latéraux opposés de la traversée (110) et les deux éléments châssis (102, 104) comprennent un évidement (120) pour recevoir une section de la traversée (110), **caractérisée en ce que**
la traversée (110) comprend des première et seconde sections terminales axiales (114, 116) et une section médiane axiale (118) et la section médiane (118) a un diamètre plus petit que les sections terminales axiales (114, 116).

2. Boîte de jonction (100) selon la revendication 1, dans laquelle les éléments châssis (102, 104) forment une rainure (122) qui passe autour d'un espace confiné entre les deux éléments châssis (102, 104) et un joint (124) pour étanchéifier les éléments châssis (102, 104) est situé dans la rainure (122).

3. Boîte de jonction (100) selon la revendication 2, dans laquelle le joint (124) est sélectionné à partir d'un d'une mousse polymérique ou d'un joint de silicone.

4. Boîte de jonction (100) selon une des revendications précédentes, dans laquelle la traversée (110) comprend de la silicone.

5. Boîte de jonction solaire (100) selon une des revendications précédentes, dans laquelle la section médiane axiale (118) a au moins la même longueur axiale que l'ouverture (120) dans les éléments châssis (102, 104) .

6. Boîte de jonction (100) selon une des revendications précédentes, dans laquelle une section (118) de la traversée (110) adjacente à l'évidement (112) a une lèvre latérale (305) qui passe dans une direction autour de la traversée (110).

7. Boîte de jonction (100) selon la revendication 6, dans laquelle il y a plusieurs lèvres parallèles (305) qui passent autour de la traversée (110).

8. Boîte de jonction (100) selon la revendication 7, dans laquelle toutes desdites plusieurs lèvres parallèles (305) sont en contact avec un évidement (120) dudit second élément châssis (104).

9. Boîte de jonction (100) selon l'une quelconque des revendications 6 ou 7, dans laquelle une première partie desdites lèvres parallèles (305) est en contact avec un évidement (120) dudit premier élément châssis (102) et une seconde partie desdites lèvres parallèles (305) est en contact avec un joint d'étanchéité (124).

10. Boîte de jonction (100) selon une des revendications précédentes, dans laquelle un premier guide-câble (132, 134) est attaché à un extérieur d'un élément châssis (104).

11. Boîte de jonction (100) selon une des revendications précédentes, dans laquelle un second guide-câble (132, 134) est attaché à l'élément châssis (104) sur un extérieur de la boîte de jonction, pour guider le câble (108) à travers un trou du second guide-câble (132, 134) .

12. Procédé pour assembler une boîte de jonction solaire (100) selon une des revendications 3 à 9, le procédé comprenant les étapes de
l'application (815) du polyuréthane liquide dans la rainure (122) d'un élément châssis (102, 104), et
- laisser (820) le polyuréthane se polymériser en un joint de mousse polymérique (124) afin de permettre l'adhérence du joint (124) à l'élément châssis (104).
